# EUROPEAN PATENT APPLICATION

(11) **EP 4 572 238 A1**
(43) Date of publication of application: **18.06.2025**
(21) Application number: 23217098.5
(22) Date of filing: 15.12.2023
(51) Int. Cl.: H04L 12/40

(54) **CAN-TRANSCEIVER FOR A CAN-BUS-NODE OF A CAN-BUS, AND A METHOD FOR OPERATING A CAN-BUS**

(71) Applicant: CARIAD SE, 38440 Wolfsburg (DE)
(72) Inventor: Sami, Dr. Akin, 30159 Hannover (DE); Engelmann, Dr. Anna, 38302 Wolfenbüttel (DE)
(74) Representative: Hofstetter, Schurack & Partner

(57) **Abstract**

The invention relates to a CAN-transceiver for a CAN-bus-node of a CAN-bus, wherein the CAN-transceiver comprises at least the following components:
- a first supply-current connection for providing a first electrical potential;
- a second supply-current connection for providing a second electrical potential;
- an H-line connection to an H-line of the CAN-bus;
- an L-line connection to an L-line of the CAN-bus;
- at least two switches configured to connect the supply-current connections to the line-connections; and
- a switch control unit for opening and closing the switches. The CAN-transceiver is characterized in particular by the fact that, by means of the at least two switches, the first supply-current connection is connectable both to the H-line connection and to the L-line connection, and the second supply-current connection is connectable both to the H-line connection and to the L-line connection.

A CAN-transceiver is proposed, which is configured to modulate three symbols on two lines of a CAN-bus.

## Description

The invention relates to a CAN-transceiver for a CAN-bus, a CAN-bus-node with such a CAN-transceiver for a CAN-bus, a CAN-bus with such a CAN-bus-node, and a method for operating a CAN-bus.

Multi-drop communication systems such as Controller Area Networks [CANs] are of ever increasing importance for real time and safety applications as they provide reliable data communications, low implementation complexity, low-cost components and priority-based media access, for example, Carrier Sense Multiple Access/Collision Resolution [CSMA/CR] that prevents high priority messages from being delayed more than a tolerable time. With the release of CAN-FD [Flexible Data-rate] and CAN-XL [eXtra Long], this type of systems will additionally provide high data rates up to 10 Mbit/s and an option to transmit messages of larger size, for example, packets with up to 64 data bytes. However, the increasing amount of data exchanged between sensors, actuators and different service functions over in-vehicle networks (IVNs) will need communication links with much higher transmission rates to meet the requirements of low latency and safety, end-to-end reliability. Thus, further CAN services will require ultra-high bit rates between Electronic Control Units (ECU). Today, the bandwidth efficiency and, thus, data rate of CAN system is limited by the modulation format used. Particularly, any CAN-bus can send one bit by transmitting one symbol as two different voltage levels, for example, dominant and recessive levels are used to modulate 0 and 1, respectively. Although using advanced modulation techniques, such as QPSK and n-QAM, can significantly increase bandwidth efficiency and data rate, they require a new concept for node arbitration and a redesign of standardized CAN models.

On this basis, the present invention is based on the task of at least partially overcoming the disadvantages known from the prior art. The features according to the invention result from the independent claims, for which advantageous embodiments are shown in the dependent claims. The features of the claims can be combined in any technically sensible manner, whereby the explanations from the following description as well as features from the figures, which comprise supplementary embodiments of the invention, can also be consulted for this purpose.

The invention relates to a CAN-transceiver for a CAN-bus-node of a CAN-bus, comprising at least the following components:
- a first supply-current connection for providing a first electrical potential;
- a second supply-current connection for providing a second electrical potential;
- an H-line connection to an H-line of the CAN-bus;
- an L-line connection to an L-line of the CAN-bus;
- at least two switches configured to connect the supply-current connections to the line connections; and
- a switch control unit for opening and closing the switches.

The CAN-transceiver is characterized in particular by the feature that, by means of the at least two switches, the first supply-current connection is connectable both to the H-line connection and to the L-line connection, and the second supply-current connection is connectable both to the H-line connection and to the L-line connection.

Unless explicitly stated to the contrary, ordinal numbers used in the preceding and following descriptions are merely for the purpose of unambiguous distinguishability and do not reflect any order or ranking of the designated components. An ordinal number greater than one does not imply that another such component must necessarily be present.

CAN-buses are designed to transmit information between Electronic Control Units [ECU] of a system. Data is receivable and sendable in the form of messages by means of the ECU. For example, a CAN-bus is designed to transmit information between the ECUs of a motor vehicle. For example, each ECU of a CAN-bus is configured to receive a message from any other ECU of the CAN-bus.

Each ECU that is connected to the CAN-bus for data transmission forms a CAN-bus-node of the CAN-bus. Preferably, the CAN-bus comprises at least two lines, one of which is referred to below as the L-line (low line) and the other as the H-line (high line). For example, the CAN-bus comprises further lines. For example, the CAN-bus comprises a third line and/or a fourth line, for example a grounding line and/or a power supply line with, for example, a voltage of 5 V [five volts].

All lines, namely the H-Line, L-line, and further lines, for example to supply a current, are made of conducive materials, and can also be named conductors. For example, the lines are cables.

Each of the ECUs includes a corresponding CAN-transceiver. By means of the CAN-transceiver, a voltage difference is applicable to the lines of the CAN-bus and detectable. For this purpose, the CAN-transceiver comprises switches by means of which a first potential at the first supply-current connection is connectable to the H-line and a second potential at the second supply-current connection to the L-line. For example, the first potential is a comparison potential and the second potential is a grounding. For example, the first potential and/or the second potential, as described above, are provided by means of further lines of the CAN-bus.

For example, the voltage potential of both lines with respect to a grounding is the same in a first state, so that the first voltage difference is a zero voltage. In a second state, for example, the voltage potential with respect to grounding in the H-line is higher than in the first state and the voltage potential with respect to grounding in the L-line is lower than in the first state. Thus, the second voltage difference between the L-line and the H-line is greater than the first voltage difference.

The CAN-transceiver is designed to switch from the first voltage difference to the second voltage difference. For example, the first voltage difference is a recessive voltage difference and the second voltage difference is a dominant voltage difference. For example, the recessive voltage difference, for example the first voltage difference, is assigned a 1 in a binary representation and the dominant voltage difference, for example the second voltage difference, is assigned a 0, as symbols.

For example, the voltage potential of both lines with respect to grounding in the first state is 2.5 V [two point five volts]. For example, the voltage potential of the H-line with respect to grounding in the second state is more than or 3.5 V [three point five volts] and the voltage potential of the L-line with respect to grounding in the second state is less than or 1.5 V [one point five volts]. Thus, the second voltage difference is 2 V [two volts] or more. Preferably, the first voltage difference is less than 1 V [one volt].

Thus, a voltage difference between the H-line and the L-line can be generated. By means of the different voltage differences, the CAN-transceiver is configured to modulate symbols, which form a message and are receivable by other CAN-bus-nodes of the CAN-bus.

For example, the first electrical potential is a comparison potential. For example, the first electrical potential is provided by means of a current line of the CAN-bus, which has, for example, a voltage of 5 V [five volts] with respect to a grounding or a grounding line.

For example, the second supply-current connection is a connection to a grounding, earth, or grounding line, respectively.

For example, the H-line and the L-line are two twisted lines of the CAN-bus.

The at least two switches are configured to connect the supply-current connections to the line-connections. That is, the switches are configured to electrically connect the line-connections to the supply-current connections and to electrically disconnect the supply-current connections from the line-connections.

The switch control unit is provided for this purpose. By means of the switch control unit, the switches are configured to be opened to disconnect the electrical connection between the supply-current connections and the line connections, and closed to close the electrical connection between the supply-current connections and the line connections.

It is now proposed here that the CAN-transceiver is configured to transmit three symbols and received via the lines of the CAN-bus. For this purpose, it is proposed that the CAN-transceiver is configured to apply a third voltage difference to the lines of the CAN-bus in addition to the first voltage difference and the second voltage difference. Thus, the switches of the CAN-transceiver are arranged and designed such that the line connections are either connectable to the same voltage potential, for example to provide a zero voltage and a first voltage difference, respectively, that the first line connection is connectable to the first supply-current connection and the second line connection is connectable to the second supply-current connection, for example to provide a positive and a second voltage difference between the H-line and the L-line, respectively, and the first supply-current connection is connectable to the second line connection and the second supply-current connection is connectable to the second line connection to provide the third voltage difference. For example, the third voltage difference is a negative voltage difference. For example, the third voltage difference is equal in its modulus (absolute value) to the second voltage difference, but with the opposite sign. For example, in the second voltage difference, the voltage potential in the H-line is higher than in the L-line, and in the third voltage difference, the voltage potential in the L-line is higher than in the H-line.

Preferably, the CAN-transceiver is designed to continue to use only two symbols in the arbitration phase. The two symbols are referred to here, and in the following, merely as A and B by way of example. For example, symbol A is represented by the second voltage difference and symbol B by the first voltage difference. This ensures that the dominant messages are sure to prevail in the arbitration phase. Alternatively, in the arbitration phase, for example, the third symbol, referred to here only as C by way of example, is equated with the first symbol or the second symbol and is thus also detected as either dominant or recessive. Particularly preferably, the CAN-transceiver is designed to use the third symbol only in a communication phase.

By means of the third symbol, for example, three bits are now transmittable in a symbol-package that is two symbols long. For example, each but one pairing of symbols in such a symbol-package is assigned a set of three bits. For example, the unassigned symbol pairing is two consecutive zero voltages, for example, according to the example explained above, the symbol pairing BB.

For example, the bits may be assigned to the symbols as follows:
- 000: AA
- 001: AB
- 010: AC
- 011: BA
- 100: BC
- 101: CA
- 110: CB
- 111: CC

By means of the CAN-transceiver proposed here, a data transmission rate higher by a factor of 1.5 is possible without compromising safety or reliability.

It is further proposed in an advantageous embodiment of the CAN-transceiver that the CAN-transceiver comprises the following components:
- a first switch arranged between the H-line and the first supply-current connection;
- a second switch arranged between the L-line and the second supply-current connection,
- a third switch arranged between the H-line and the second supply-current connection; and
- a fourth switch located between the L-line and the first supply-current connection.

According to this embodiment, the CAN-transceiver now comprises four switches.

The first switch is arranged between the H-line and the first supply-current connection. The first switch is therefore configured to be used connecting the first supply-current connection to the H-line connection.

The second switch is arranged between the L-line and the second supply-current connection. The second switch is therefore configured to be used connecting the second supply-current connection to the L-line connection.

The third switch is arranged between the H-line and the second supply-current connection. The third switch is therefore configured to be used connecting the second supply-current connection to the H-line connection.

The fourth switch is arranged between the L-line and the first supply-current connection. The fourth switch is therefore configured to be used connecting the first supply-current connection to the L-line connection.

Thus, for example, the first switch and the second switch are closed to connect the H-line to the first potential and to connect the L-line to the second potential. Thus, the second voltage difference is applied between the H-line and the L-line and the symbol A is transmitted.

To transmit the symbol previously designated B, for example, all switches are open so that there is no voltage difference between the L-line and the H-line, for example, there is zero voltage.

To transmit the symbol previously designated as C, for example, the third switch and the fourth switch are closed. Thus, compared to the circuit for symbol A, an opposite voltage is present between the H-line and the L-line.

For example, the CAN-transceiver comprises two first supply-current connections, two second supply-current connections, two H-line connections, and/or two L-line connections so that each switch connects separate connections to each other. Alternatively, the CAN-transceiver comprises, for example, only a single first supply-current connection, a single second supply-current connection, an H-line connection and/or an L-line connection, so that, for example, the first switch and the third switch are connectable to the same H-line connection.

This embodiment enables simple, safe and cost-effective implementation of the switches and the CAN-transceiver.

It is further proposed in an advantageous embodiment of the CAN-transceiver that the CAN-transceiver comprises at least one, preferably two, control lines for transmitting a control signal from the switch control unit to the switch.

According to this embodiment, the CAN-transceiver comprises two control lines by means of which the switches are connected to the switch control unit.

It is further proposed in an advantageous embodiment of the CAN-transceiver that the first switch and the second switch are controllable by means of a first control line, and/or
the third switch and the fourth switch are controllable by means of a second control line.

The first control line connects the first switch and the second switch to the switch control unit, and the second control line connects the third switch and the fourth switch to the switch control unit. Thus, for example, the first switch and the second switch are switched via a common signal by means of the first control line, that is, the first and second switch are opened or closed, as explained above. For example, the third switch and the fourth switch are switchable via a common signal by means of the second control line.

For example, the switches are normally open and closeable by energizing the control line. Alternatively, the switches are normally closed and openable by energizing the control line.

A CAN-transceiver according to the embodiment proposed here is a particularly simple and inexpensive control of the switches according to the above description can be implemented.

It is further proposed in an advantageous embodiment of the CAN-transceiver that the switches are transistors.

According to a further aspect, a CAN-bus-node for a CAN-bus is proposed, comprising at least the following components:
- a CAN-transceiver according to an embodiment as described above; and
- a processor comprising a CAN-controller.

The CAN-bus-node is therefore an ECU that is configured to communicate with other ECUs via the CAN-bus. For this purpose, the CAN-bus-node comprises a CAN-transceiver which is designed to translate data from the processor signal into a CAN-bus signal.

For example, the CAN-transceiver comprises a safety circuit for protecting the processor. The processor is or preferably comprises a microprocessor and/or a host processor. For example, the processor is adapted to decide what messages from other ECUs, for example symbols sent by the ECUs in communication messages, mean and what messages should be sent by the ECU. For example, sensors, actuators, and/or other monitoring devices are connected to the processor.

Furthermore, the CAN-transceiver comprises a CAN-controller, which is integrated in the processor, for example. For example, the CAN-controller is configured to forward received data packages from other ECUs to the processor of the ECU or translate the messages for it. For example, the data packages are forwarded to the processor in summarized form. Further, messages broadcasted by the processor are translatable and forwardable for the transceiver. In a further example, the CAN-controller is configured to buffer data packages from the ECU and transmit those data packages via the CAN-bus when the CAN-bus lines are free or when it is the turn of the data packages to be prioritized.

According to a further aspect, a CAN-bus is proposed comprising:
- an H-line;
- an L-line; and
- at least two CAN-bus-nodes according to an embodiment as described above, which are interconnected by means of the H-line and the L-line.

The CAN-bus is designed to transmit information between the ECU of a system, for example a control system of a motor vehicle. The ECU is configured to receive and transmit data. For example, the CAN-bus is designed to transmit information between the ECUs of a motor vehicle. For example, by means of each ECU of a CAN-bus, a message of any other ECU of the CAN-bus receivable.

Each ECU that is connected to the CAN-bus for data transmission forms a CAN-bus-node of the CAN-bus. Preferably, the CAN-bus comprises at least two lines, the L-line (low line) and the H-line (high line). For example, the CAN-bus comprises further lines. For example, the CAN-bus comprises a third line and/or a fourth line, for example a grounding line and/or a power supply line with, for example, a voltage of 5 V [five volts].

Each of the ECUs comprises a corresponding CAN-transceiver, of which at least one, preferably all, are configured as described above. By means of the CAN-transceiver, a voltage difference is applicable to the lines of the CAN-bus and is detectable.

For example, the voltage potential of both lines with respect to a grounding is the same in a first state, so that the first voltage difference is a zero voltage. In a second state, for example, the voltage potential with respect to grounding in the H-line is higher than in the first state and the voltage potential in L-line is lower than in the first state. Thus, the second voltage difference between the L-line and the H-line is greater than the first voltage difference.

The CAN-transceiver is now designed to switch from the first voltage difference to the second voltage difference. For example, the first voltage difference is a recessive voltage difference and the second voltage difference is a dominant voltage difference. For example, the recessive voltage difference, for example the first voltage difference, is assigned a 1 in a binary representation and the dominant voltage difference, for example the second voltage difference, is assigned a 0.

For example, the voltage potential of both lines with respect to grounding in the first state is 2.5 V [two point five volts]. For example, the voltage potential of the H-line with respect to grounding in the second state is more than or 3.5 V [three point five volts] and the voltage potential of the L-line with respect to grounding in the second state is less than or 1.5 V [one point five volts]. Thus, the second voltage difference is 2 V [two volts] or more.

Thus, a voltage difference between the H-line and the L-line can be generated. By means of the different voltage differences, symbols can be modulated, which form a message and can be received by other CAN-bus-nodes of the CAN-bus.

For example, the L-line and the H-line are separated by a defined resistor. For example, the defined resistor is 120 ohms. For example, the H-line and the L-line are copper lines.

According to a further aspect, a method for operating a CAN-bus is proposed, comprising at least the following components:
- at least two CAN-bus-nodes each comprising a CAN-transceiver, a processor and a CAN-controller
- an H-line; and
- an L-line,
the method comprising at least the following steps in the order mentioned:
a. by means of outputting at least one prioritization message from at least one of the CAN-bus-nodes having two symbols, performing an arbitration phase; and
b. by means of an output of a communication message from a CAN-bus-node which was dominant in the arbitration phase, transmitting an information.

The method is mainly characterized in that the communication message in step b. is modulated by means of the CAN-transceiver of the CAN-bus-node based on three different symbols.

The proposed method is used to operate a CAN-bus, for example to transmit data between two ECUs of the CAN-bus. The CAN-bus comprises at least two CAN-bus-nodes, for example ECUs, an H-line and an L-line. The at least two CAN-bus-nodes each comprise at least one CAN-transceiver, a processor and a CAN-controller. With regard to possible designs and functionalities which such a CAN-bus and its components may have, for example, reference is made to the above description.

In step a. of the procedure, an arbitration phase is first performed. In the arbitration phase, prioritization takes place to determine which ECU or which CAN-bus-node is allowed to send its message via the ladder. For example, each ECU that wants to send a message sends a prioritization message. The prioritization message contains a sequence of bits. For example, a 0 is the dominant bit and a 1 is the recessive bit. Thus, the ECUs are configured to detect whether at least one other ECU in the CAN-bus is sending a dominant bit when it itself is sending a recessive bit. In such a case, the ECU exits the arbitration phase. Each prioritization message contains an individual binary number, for example a bit sequence, so that one ECU prevails in the arbitration phase, while all the other ECUs gradually leave the arbitration phase, for example, when a recessive bit is sent. According to the above assignment that 0 is the dominant bit, the ECU that sends the prioritization message with the smallest number prevails.

For example, the CAN-bus is a deterministic system comprising a limited number of ECUs and functions. For example, each ECU or each possible combination of a function and an ECU is assigned a fixed arbitration number, which is sent as a prioritization message.

In a step **b**., the ECU that prevailed as dominant in the arbitration phase sends a communication message via the CAN-bus that is received by the other ECUs of the CAN-bus. By means of the communication message, the ECU transmits information to at least one other ECU of the CAN-bus.

The communication message, which is output in step **b.**, is based on three different symbols. In accordance with the above description, these symbols are only referred to here as A, B and C as examples. Each symbol is represented by a voltage difference in the lines of the CAN-bus. Preferably, a first voltage difference is a positive voltage, a second voltage difference is a zero voltage, and a third voltage difference is a negative voltage which corresponds in modulus (its absolute value) to the first voltage difference. For example, the first voltage difference represents symbol A, the second voltage difference represents symbol B, and the third voltage difference represents symbol C.

Other CAN-bus-nodes then receive the communication message and preferably translate a sequence of said symbols or voltage differences into a binary signal consisting of a corresponding number of bits. For this purpose, a symbol-package with several symbols is preferably assigned to a binary number or sequence of bits. With three different symbols, for example three voltage differences, an information content log2(3) ≈ 1.5850 bits can thus theoretically be transmitted with each transmitted symbol. A symbol-package comprising two symbols is thus suitable to transmit 3 bits. Thus, a symbol-package preferably comprises at least two symbols. A symbol-package consisting of two symbols allows correspondingly nine symbol combinations, on which now 2^3 bits, that is 8 bits, are modulatable. Thus, one symbol combination remains unoccupied. Preferably, the symbol combination of two subsequent zero voltages remains unoccupied, so that a symbol-package preferably cannot consist of two zero voltage symbols, for example twice the symbol B according to the above description. By means of such an assignment of binary bits to the symbols, the transmission reliability can be increased and the error detection can be improved.

Preferably, the method for operating the CAN-bus comprises further phases which are known to the person skilled in the art. For example, a so-called CAN-frame comprises a start phase, in which it is signalled that a new CAN-frame is starting, the arbitration phase described above, a control phase, the communication phase described above, a CRC phase, a delimiter phase and/or an end-of-frame phase.

It is further proposed in an advantageous embodiment of the method that the CAN-bus is a CAN-bus according to an embodiment as described above.

Here it is proposed that the method is designed to operate a CAN-bus according to the above description. It should be noted that the CAN-bus or the CAN-bus-node or the CAN-transceiver is designed to perform the method according to the above description. In particular, the CAN-transceiver is adapted, by means of the switches and the switch control unit, respectively, to send a communication message according to step **b.** with three different symbols. Furthermore, the CAN-bus-node is adapted to receive a corresponding communication message and to translate it into a binary signal.

It is further proposed in an advantageous embodiment of the method that in the arbitration phase in step **a.** the prioritization message is modulated based solely on two different symbols.

According to this embodiment in the arbitration phase no three symbols are used, as in the communication message, but only two different symbols. The prioritization message thus preferably consists of or comprises a binary sequence of digits. For example, 0 is the recessive digit and 1 is the dominant digit in such a sequence of digits.

Preferably, only the communication message in a CAN frame comprises three symbols. In this way, a high degree of safety and error detection can be implemented and a high data transmission rate can be displayed at the same time.

It is further proposed in an advantageous embodiment of the method that the communication message comprises symbol-packages of two consecutive symbols each containing three bits.

It is further proposed in an advantageous embodiment of the method that a first of said symbols is represented by a positive voltage difference between the H-line and the L-line,
a second of said symbols is represented by a zero voltage as a second voltage difference between the H-line and the L-line, and
a third of said symbols is represented by a negative voltage difference between said H-line and said L-line.

It is further proposed in an advantageous embodiment of the method that the only unoccupied symbol pairing of a symbol-package of a communication message is two consecutive zero voltages.

It is further proposed in an advantageous embodiment of the method that a protocol for modulating the symbols does not include a state in which all four switches are closed simultaneously.

According to this embodiment not all four switches are closed simultaneously during the procedure. For example, a closing signal is not output simultaneously by means of both control lines. For example, a zero voltage is present as a voltage difference between the H-line and the L-line for all four switches closed. However, this voltage difference is, for example, also implemented, via an open state of all switches, so that this state is selected, for example, to represent the zero voltage. By means of this embodiment, overheating and short circuits can be avoided.

The invention described above is explained in detail below against the relevant technical background with reference to the accompanying drawings, which show preferred embodiments. The invention is not limited in any way by the purely schematic drawings, it being noted that the drawings are not dimensionally accurate and are not suitable for defining dimensional relationships. It is illustrated in
Fig. 1: a CAN-bus in a symbolic representation;
Fig. 2: a transceiver in a symbolic representation according to the prior art;
Fig. 3: a CAN-transceiver for a CAN-bus according to Fig. 1 in a symbolic representation;
Fig. 4: a table of the symbols depending on switching states of a CAN-transceiver according to Fig. 3;
Fig. 5: a symbol-package mapping table and a message in binary code;
Fig. 6: a flowchart of a method for operating a CAN-bus according to Fig. 1;
Fig. 7: a table of the symbols depending on switching states of a CAN-transceiver according to Fig. 3; and
Fig. 8: a motor vehicle with a CAN-bus according to Fig. 1 in a symbolic representation.

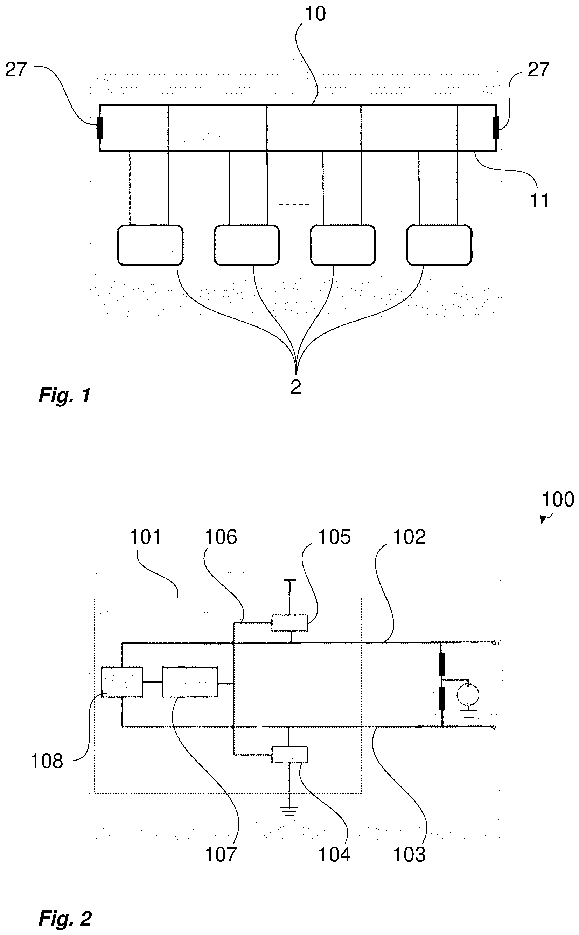

Fig. 1 shows a CAN-bus **3** in a symbolic representation. The CAN-bus **3** comprises an H-line **10** and an L-line **11,** which are separated from each other by means of defined resistors **27.**

Four Electronic Control Units [ECU **2**], that is CAN-bus-nodes **2**, are shown purely as an example. As indicated by the dashed line, however, the CAN-bus **3** preferably comprises considerably more ECUs **2.**

The CAN-bus **3** is designed to transmit information between the ECU **2.** Information in the form of messages is received and sent by means of the ECU **2.** Each ECU **2** of the CAN-bus **3** is configured to receive a message from any other ECU **2** of the CAN-bus **3.** The CAN-bus **3** is therefore a non-hierarchical communication system of several ECU **2.**

The ECU **2** forms circuits open to the CAN-bus **3**, by means of which voltage differences between the H-line **10** and the L-line **11** is set or received for transmitting and receiving data. According to the prior art (see Fig. 2), two voltage levels are used to transmit a binary signal. According to the present invention, the ECU **2** is configured to set three different voltage differences between the H-line **10** and the L-line **11**, for example to transmit three different symbols **21.** Thus, a higher data transmission rate can be implemented.

For example, the first voltage difference is greater than the second voltage difference. For example, the second voltage difference is a zero voltage, that is, the second voltage difference falls below a certain limit value and is preferably zero. Accordingly, the first voltage difference is present when a certain limit value is exceeded, which is greater than that limit value assigned to the second voltage difference. The third voltage difference is preferably equal in amount (modulus) to the first voltage difference, but with the opposite sign.

For example, the voltage potential of both lines **10,11** with respect to grounding is the same at the second voltage difference, so that the second voltage difference is a zero voltage. For the first voltage difference, voltage potential with respect to grounding in the H-line **10** is higher than that for the second voltage difference, and voltage potential in the L-line **11** is lower than that at the first voltage difference. Thus, the second voltage difference between the L-line **10** and the H-line **11** is larger than the first voltage difference. For the third voltage difference, the voltage potential in the L-line **11** is correspondingly greater and in the H-line **10** smaller.

The CAN-transceiver **1** is designed to switch between the first voltage difference, the second voltage difference and the third voltage difference. For example, the first voltage difference is a recessive voltage difference and the second voltage difference is a dominant voltage difference. For example, the recessive voltage difference, for example the first voltage difference, is assigned a 1 in a binary representation and the dominant voltage difference, for example the second voltage difference, is assigned a 0.

For example, the voltage potential of both lines **10,11** with respect to grounding at the second voltage difference is 2.5 V [two point five volts]. For example, the voltage potential of the H-line **10** with respect to grounding at the first voltage difference is more than or 3.5 V [three point five volts] and the voltage potential of the L-line **11** with respect to grounding is 1.5 V [one point five volts] or less. Thus, for example, the first voltage difference is 2 V [two volts] or more. At the third voltage difference, the voltage potential of the L-line **11** with respect to grounding is more than or 3.5 V [three point five volts] and the voltage potential of the H-line **10** with respect to grounding is 1.5 V [one point five volts] or less.

Thus, the CAN-transceiver **1** is configured to generate a voltage difference between the H-line **10** and the L-line **11.** By means of the different voltage differences, symbols **21** are modulated, which form a message and are received by other CAN-bus-nodes **2** of the CAN-bus **3.**

In Fig. 2, a transceiver **101** for a bus **100** according to the prior art is shown in a symbolic representation. The transceiver **101** is only configured to set a maximum of two voltage differences between the L-line **103** and the H-line **102** of the bus **100.** Thus, two different symbols, for example a binary signal, is transmittable via the lines **102,103.** The H-line **102** is connectable to a first potential by means of a switch **104** and the L-line **103** is connectable be connected to a grounding by means of a second switch **105.** If the switches **104,105** are closed, the voltage potential in the H-line **102** increases and decreases in the L-line **103.** Thus, the voltage difference increases to a second voltage difference compared to a first voltage difference between the H-line **102** and the L-line **103**, in which both switches **104,105** are open and thus, for example, a zero voltage is present, by a measurable value.

The switches **104,105** are switchable by means of a common control line **106** from a control unit **107**, which is connected to the processor **108** of the ECU.

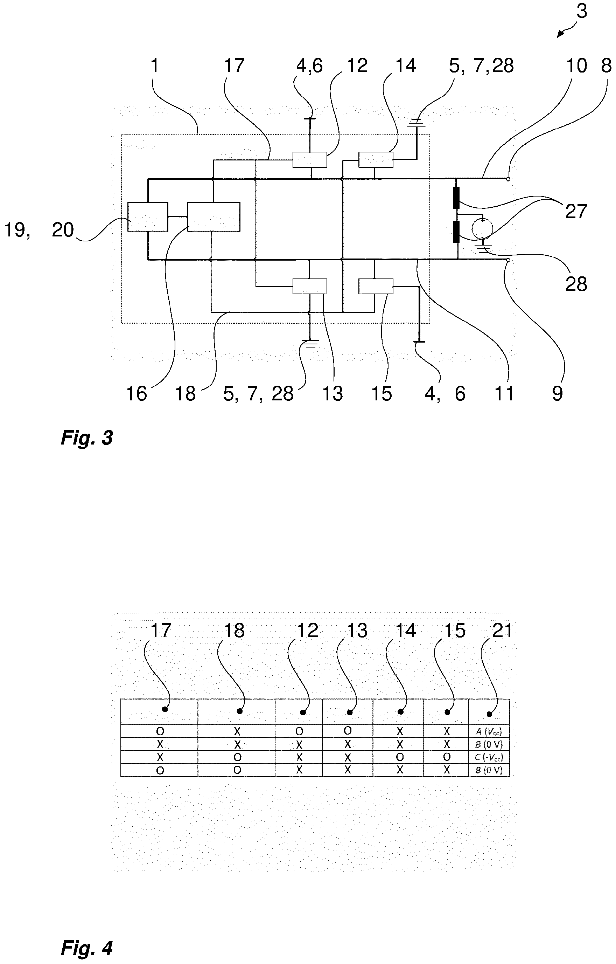

Fig. 3 shows a CAN-transceiver **1** for a CAN-bus **3** according to Fig. 1 in a symbolic representation. Compared to the CAN-transceiver **1** known from the prior art (compare Fig. 2), the CAN-transceiver **1** comprises four switches **12,13,14,15.** The four switches **12,13,14,15** are arranged in such a way that both the H-line **10** of the CAN-bus **3** and the L-line **11** of the CAN-bus **3** are each be connectable to a first potential **4** and to grounding **28** as a second potential **5.** The first potential **4** is provided, for example, by means of a current line of the CAN-bus **3,** which has, for example, a voltage of 5 V [five volts] with respect to the grounding **28** or a grounding line.

As shown, the first switch **12** is arranged between the H-line **10** and the first potential **4** or a first supply-current connection **6** of the CAN-transceiver **1.** The second switch **13** is arranged between the L-line **11** and the second potential **5** or a second potential connection **7** between the CAN-transceiver **1** and the grounding **28.** The third switch **14** is arranged between the H-line **10** and the second potential **5,** shown here with another separate second supply-current connection **7.** The fourth switch **15** is arranged between the L-line **11** and the first potential **4,** shown here with another separate first supply-current connection **6.**

The switches **12,13,14,15** are controllable by means of a switch control unit **16.** The switch control unit **16** is connected to the switches **12, 13, 14, 15** by means of two control lines **17, 18,** by means of which control signals are transmitted from the switch control unit **16** to the switches **12, 13, 14, 15.** A first of the two control lines **17** connects the switch control unit **16** to the first switch **12** and the second switch **13,** so that the first switch **12** and the second switch **13** are opened and/or closed by means of a common signal via the first control line **17.**

A second of the two control lines **18** connects the third switch **14** and the fourth switch **15** to the switch control unit **16,** so that the third switch **14** and the fourth switch **15** are opened and/or closed by means of a common signal via the second control line **18.** The switches **12,13,14,15** are, for example, transistors which are closed by means of a control signal from the corresponding control line **17,18.**

Purely for the sake of clarity, a processor **19** of the ECU **2** is shown here in the CAN-transceiver **1**, which comprises, for example, a CAN-controller **20** for translating and temporarily storing data between the processor **19** and the switch control unit **16.** By means of the processor **19,** for example, the messages received or sent by means of the CAN-transceiver **1** are generated or evaluated.

By means of the four switches **12,13,14,15,** a third voltage difference is provided in addition to a first voltage difference, in which the H-line **10** is connected, for example, to the first potential **4** and the L-line **11** is connected to the grounding **28,** and the second voltage difference, in which, for example, all switches **12,13,14,15** are open (see Fig. 2). This third voltage difference corresponds in modulus to the first voltage difference, but with the opposite sign. This means that the higher potential is now applied to the L-line **11** for the third voltage difference, instead of the H-line **10** as for the first voltage difference. For this purpose, the L-line **11** is connected to the first potential **4** and the H-line **10** to the second potential **5**, for example the grounding **28**.

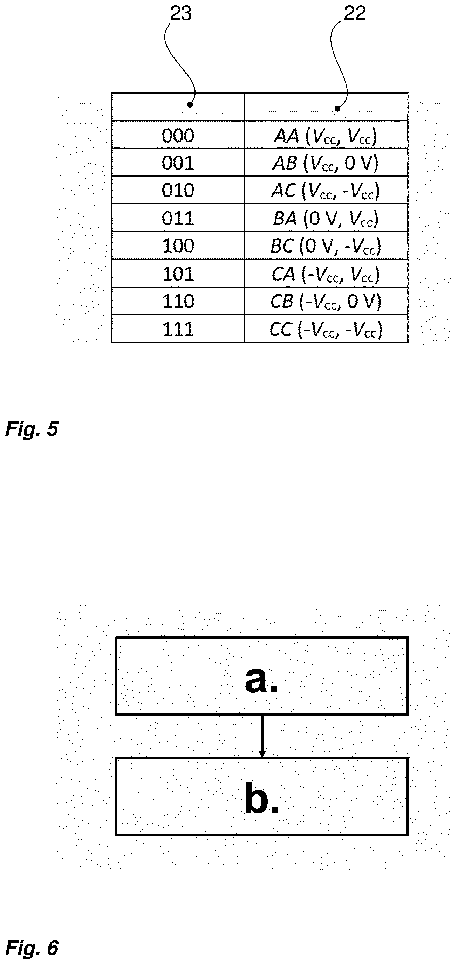

It is therefore possible to apply three voltage differences to the lines **10,11** and thus transmit three different symbols **21.** In the following, these three different symbols **21** are referred to as A, B and C by way of example for easier understanding (see Fig. 4 and Fig. 5).

Fig. 4 shows a table for the symbols **21** depending on the switching states of a CAN-transceiver **1** according to Fig. 3, showing which signals the control lines **17,18** transmit and which position the four switches **12,13,14,15** have in order to modulate the three different symbols **21** A, B and C. The first column shows which signal the first control line **17** transmits, the second column shows which signal the second control line **18** transmits, and the third column shows the position of the first switch **12**, the fourth column shows the position of the second switch **13,** the fifth column shows the position of the third switch **14,** in the sixth column, the position of the fourth switch **15** is plotted, and in the seventh column, the symbol **21** modulated therewith (the voltage difference present between H-line **10** and L-line **11**) is plotted, wherein, for example, *V_{cc}* is a voltage between a current line and a grounding line or a grounding **28** of the CAN-bus **3.** Here, the symbol **21** A and the associated switching states are plotted in the second line, the symbol **21** B in line three and the symbol **21** C in line four. Line five shows an alternative to line three, for example a modelling of the symbol **21** B, for example the zero voltage. Here, in line three both control lines **17,18** are set to off (shown here as X) and in line five both control lines **17,18** are set to on (shown here as O). Nevertheless, in both cases all switches **12,13,14,15** are in the off position. Preferably, the CAN-transceiver **1** is designed accordingly, for example to avoid overheating. Preferably, however, symbol **21** B is modulated by both control lines **17,18** transmitting an off according to line three.

Fig. 5 shows an assignment table for symbol-packages **22** and a message in binary code. It is clear that with a symbol-package **22** consisting of two consecutive symbols **21**, which are explained above with reference to Fig. 1, Fig. 3 and Fig. 4, three bits **23** are transmittable. A sequence of symbol-packages 22 is thus receivable by means of the other ECU **2** and translatable, for example, into a binary code.

Column one contains the respective bit **23** triple and column two the correspondingly assigned symbol pairing and in brackets the respective voltage difference between the lines **10,11** of the CAN-bus **3.** The bits **23** are arranged chronologically from top to bottom. The symbol pairing BB is not assigned. A symbol pairing remains unassigned when two consecutive symbols **21** are assigned from a set of three different symbols **21.** Preferably, the BB symbol pairing, for example two consecutive zero voltages, is not assigned in order to reduce the susceptibility to errors and to increase the transmission reliability.

Fig. 6 shows a flow chart of a method for operating a CAN-bus **3** according to Fig. 1. First, an arbitration phase is performed to determine which ECU **2** of the CAN-bus **3** may send its message. For this purpose, all ECU **2** which want to send a message send a prioritization message via the CAN-bus **3**, by means of a voltage difference as described above.

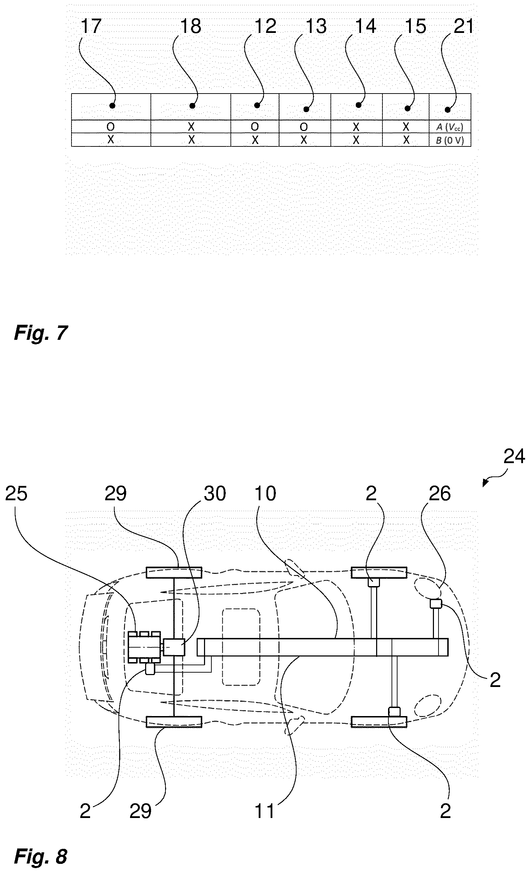

Preferably, however, no message consisting of three symbols **21** is sent during the arbitration phase (compare Fig. 7), but a prioritization message consisting of only two different symbols **21**, for example binary. Here, one symbol **21** is dominant and the other symbol **21** is recessive. For example, a 0, for example the second voltage difference, is dominant and a 1, for example the first voltage difference, is recessive. In this case, all ECU **2** detect whether the first voltage difference is present at the respective bit **23** on the lines **10,11,** for example whether an ECU **2** transmits a dominant symbol **21** for the bit **23** in a bit sequence of the prioritization message which is currently in turn according to a clocking. If this is the case and the ECU **2** in question itself sends a recessive symbol **21**, the ECU **2** withdraws from the arbitration phase. In this case, each ECU **2** has a unique prioritization message for the planned communication message, so that in the end only one ECU **2** with the highest priority remains in the arbitration phase. According to the example explained, this is the ECU **2** with the smallest binary number for the arbitration phase.

The ECU **2,** which has prevailed in the arbitration phase (meaning was dominant) is sending, in a step **b.,** the communication message. The three symbols **21** are used for this purpose, as explained above.

Fig. 7 shows a table for symbols **21** depending on switching states of a CAN-transceiver **1** according to Fig. 3 in an arbitration phase according to Fig. 6, using only symbols **21** A and B, for example two symbols **21,** as explained above.

In Fig. 8, a motor vehicle **24** with a CAN-bus **3** according to Fig. 1 is shown in a symbolic representation. With regard to the CAN-bus **3**, reference is therefore made to the above description for the other Figures.

The motor vehicle **24** further comprises a drive unit **25** and at least one drive wheel **29.** As shown, the motor vehicle **24** comprises four wheels, two of which are designed as drive wheels **29.** The drive wheels **29** are connected to the drive unit **25** in a torque-transmitting manner, as shown by means of a gearbox **30.** The drive unit **25** is designed to provide a drive torque for the motor vehicle **24.** As shown, the drive unit **25** is an internal combustion engine.

The motor vehicle **24** comprises a plurality of ECU **2.** The ECU **2** are connected to each other in a communicating manner as CAN-bus-nodes **2** by means of the CAN-bus **3.** For example, the ECU **2** are control units for the headlights **26**, the drive unit **25**, air conditioning units, brakes, sensors, window regulators, infotainment systems or other motor vehicle components.

A CAN-transceiver is proposed, which is configured to modulate three symbols on two lines of a CAN-bus.

### List of reference signs

| | | | |
|---|---|---|---|
| 1 | CAN-transceiver | 30 | Gearbox |
| 2 | CAN-bus-node | 100 | Bus |
| 3 | CAN-bus | 101 | Transceiver |
| 4 | first potential | 102 | H-line |
| 5 | second potential | 103 | L-line |
| 6 | First supply-current connection | 104 | Switch to L-line |
| 7 | Second supply-current connection | 105 | Switch to H-line |
| | | 106 | Control-Line |
| 8 | H-line connection | 107 | Control unit |
| 9 | L-line connection | 108 | Processor |
| 10 | H-line | | |
| 11 | L-line | | |
| 12 | first switch | | |
| 13 | second switch | | |
| 14 | Third switch | | |
| 15 | fourth switch | | |
| 16 | Switch control unit | | |
| 17 | first control line | | |
| 18 | second control line | | |
| 19 | Processor | | |
| 20 | CAN-controller | | |
| 21 | Symbol | | |
| 22 | Symbol-package | | |
| 23 | Bit | | |
| 24 | Motor vehicle | | |
| 25 | Drive unit | | |
| 26 | Headlight | | |
| 27 | Resistor | | |
| 28 | Grounding | | |
| 29 | Drive wheel | | |

## Claims

1. CAN-transceiver (1) for a CAN-bus-node (2) of a CAN-bus (3), comprising at least the following components:
- a first supply-current connection (6) for providing a first electrical potential (4);
- a second supply-current connection (7) for providing a second electrical potential (5);
- an H-line connection (8) to an H-line (10) of the CAN-bus (3);
- an L-line connection (9) to an L-line (11) of the CAN-bus (3);
- at least two switches (12, 13, 14, 15) configured to connect the supply-current connections (6, 7) to the line-connections (8, 9); and
- a switch control unit (16) for opening and closing the switches (12, 13, 14, 15),
**characterized in that**
by means of the at least two switches (12, 13, 14, 15) the first supply-current connection (6) is connectable both to the H-line connection (8) and to the L-line connection (9) and the second supply-current connection (7) is connectable both to the H-line connection (8) and to the L-line connection (9).

2. CAN-transceiver (1) according to claim 1, comprising at least the following components:
- a first switch (12) arranged between the H-line (10) and the first supply-current connection (6); and
- a second switch (13) arranged between the L-line (11) and the second supply-current connection (7),
- a third switch (14) arranged between the H-line (10) and the second supply-current connection (7); and
- a fourth switch (15) arranged between the L-line (11) and the first supply-current connection (6).

3. CAN-transceiver (1) according to claim 1 or claim 2, comprising.
at least one, preferably two, control lines (17,18) for transmitting a control signal from the switch control unit (16) to the switch (12,13,14,15).

4. CAN-transceiver (1) according to one of the preceding claims, wherein
the first switch (12) and the second switch (13) are controllable by means of a first control line (17), and/or
the third switch (14) and the fourth switch (15) are controllable by means of a second control line (18).

5. CAN-transceiver (1) according to any one of the preceding claims, wherein the switches (12,13,14,15) are transistors.

6. CAN-bus-node (2) for a CAN-bus (3), comprising at least the following components:
- a CAN-transceiver (1) according to one of the preceding claims; and
- a processor (19) comprising a CAN controller (20).

7. CAN-bus (3), comprising
- an H-line (10);
- an L-line (11); and
- at least two CAN-bus-nodes (2) according to claim 6, which are interconnected by means of the H-line (10) and the L-line (11).

8. Method for operating a CAN-bus (3), comprising at least the following components:
- at least two CAN-bus-nodes (2), each having a CAN-transceiver (1), a processor (19) and a CAN controller (20);
- an H-line (10); and
- an L-line (11),
the method comprising at least the following steps in the order mentioned:
**a.** by means of an output of at least one prioritization message from at least one of the CAN-bus-nodes (2) with two symbols (21), performing an arbitration phase;
**b.** by means of outputting a communication message from a CAN-bus-node (2) which was dominant in the arbitration phase, transmitting information,
**characterized in that**
the communication message in step **b.** is modulated by means of the CAN-transceiver (1) of the CAN-bus-node (2) on the basis of three different symbols (21).

9. Method according to claim 8, wherein
the CAN-bus (3) is a CAN-bus (3) according to claim 7.

10. Method according to claim 8 or claim 9, wherein
in the arbitration phase in step **a.** the prioritization message is modulated exclusively based on two different symbols (21).

11. Method according to any one of claim 8 to claim 10, wherein
the communication message comprises symbol-packages (22) of two consecutive symbols (21) each including three bits (23).

12. Method according to any one of claim 8 to claim 11, wherein
a first of said symbols (21) is represented by a positive voltage difference between said H-line (10) and said L-line (11),
a second of said symbols (21) is represented by a zero voltage as a second voltage difference between said H-line (10) and said L-line (11), and
a third of the symbols (21) is represented by a negative voltage difference between the H-line (10) and the L-line (11).

13. Method of any one of claim 8 to claim 12, wherein
the only unoccupied symbol pairing of a symbol-package (22) of a communication message is two consecutive zero voltages.

14. Method according to any one of claim 8 to claim 13, wherein
a protocol for modulating the symbols (21) does not include a state in which all four switches (12,13,14,15) are simultaneously closed.
